Europäisches Patentamt

European Patent Office

Office européen des brevets

(11) Publication number: **0 138 056**
**B1**

# EUROPEAN PATENT SPECIFICATION

(45) Date of publication of patent specification: **23.12.87**

(51) Int. Cl.⁴: **H 01 M 6/16**

(21) Application number: **84110848.3**

(22) Date of filing: **12.09.84**

(54) **Nonaqueous cell with a novel organic electrolyte.**

(30) Priority: **19.09.83 US 533669**

(43) Date of publication of application:
**24.04.85 Bulletin 85/17**

(45) Publication of the grant of the patent:
**23.12.87 Bulletin 87/52**

(84) Designated Contracting States:
**FR**

(56) References cited:
**DE-A-3 235 941**

**CHEMICAL ABSTRACTS, vol. 91, no. 24,
December 10, 1979, Columbus, Ohio, USA
FURUKAWA NOBUHIRO et al. "Nonaquous
electrolyte battery" page 527, column 1,
abstract-no. 219 367u**

(73) Proprietor: **EVEREADY BATTERY COMPANY,
INC.
Checkerboard Square
St. Louis Missouri 63164 (US)**

(72) Inventor: **Marple, Jack William
151 Bethesda Circle
Elyria, OH 44035 (US)**
Inventor: **O'Hara, III, Thomas James
30922 Carlton Drive
Bay Village, OH 44140 (US)**

(74) Representative: **Görtz, Dr. Fuchs, Dr.
Luderschmidt Patentanwälte
Sonnenberger Strasse 100 Postfach 26 26
D-6200 Wiesbaden (DE)**

Courier Press, Leamington Spa, England.

## Description

Technical field

The invention relates to a nonaqueous cell comprising an active metal anode, a cathode and a nonaqueous electrolyte solution, comprising a solute of lithium perchlorate and lithium trifluoromethane sulfonate dissolved in a solvent mixture of propylene carbonate and dimethoxyethane.

Background of the art

The development of high energy battery systems requires the compatibility of an electrolyte possessing desirable electrochemical properties with highly reactive anode materials, such as lithium, sodium, and the like and the efficient use of high energy density cathode materials, such as manganese dioxide, polycarbon fluorides such as $(C_2F)_n$, $(CF_x)_n$ in which x is greater than 0 up to about 1.2 and the like. The use of aqueous electrolytes is precluded in these systems since the anode materials are sufficiently active to react with water chemically. It has therefore been necessary, in order to realize the high energy density obtainable through use of these highly reactive anodes and high energy density cathodes, to turn to the investigation of nonaqueous electrolyte systems and more particularly to nonaqueous organic electrolyte systems.

A multitude of solutes is known and recommended for use but the selection of a suitable solvent has been particularly troublesome since many of those solvents which are used to prepare electrolytes sufficiently conductive to permit effective ion migration through the solution are reactive with the highly active anodes mentioned above. Most investigators in this area, in search of suitable solvents, have concentrated on aliphatic and aromatic nitrogen- and oxygen-containing compounds with some attention given to organic sulfur-, phosphorus- and arsenic-containing compounds. The results of this search have not been entirely satisfactory since many of the solvents investigated still could not be used effectively with high energy density cathode materials, such as manganese dioxide ($MnO_2$), poly-carbon fluoride and the like, and were sufficiently corrosive to lithium anodes to prevent efficient performance over any length of time.

Although manganese dioxide has been mentioned as a possible cathode for cell applications, manganese dioxide inherently contains an unacceptable amount of water, both of the adsorbed and bound types, which is sufficient to cause anode (lithium) corrosion along with its associated hydrogen evolution. This type of corrosion that causes gas evolution is a serious problem in sealed cells, particularly in miniature type button cells. In order to maintain overall battery-powered electronic devices as compact as possible, the electronic devices are usually designed with cavities to accommodate the miniature cells as their power source. The cavities are usually made so that a cell can be snugly positioned therein thus making electronic contact with appropriate terminals within the device. A major potential problem in the use of cell-powered devices of this nature is that if the gas evolution causes the cell to bulge then the cell could become wedged within the cavity. This could result in damage to the device. Also, if electrolyte leaks from the cell it could cause damage to the device. Thus it is important that the physical dimensions of the cell's housing remain constant during discharge and that the cell will not leak any electrolyte into the device during storage or discharge.

US—A—4,133,856 discloses a process for producing an $MnO_2$ electrode (cathode) for nonaqueous cells whereby the $MnO_2$ is initially heated within a range of 350°C to 430°C so as to substantially remove both the adsorbed and bound water and then, after being formed into an electrode with a conductive agent and binder. It is further heated in a range of 200°C to 350°C prior to its assembly into a cell. GB—A—1,199,426 also discloses the heat treatment of $MnO_2$ in air at 250°C to 450°C to substantially remove its water component.

In US—A—4,419,423 a nonaqueous cell is disclosed which comprises a highly active metal anode such as lithium, a manganese dioxide-containing cathode wherein the manganese dioxide has a water content of less than 1 weight percent based on the weight of the manganese dioxide, and a liquid organic electrolyte comprising lithium trifluoromethane sulfonate dissolved in propylene carbonate and dimethoxyethane.

JP—A—54/110429/(Chem. Abstr., Vol. 91, No. 24, p. 527, 219 367n) discloses a nonaqueous cell employing an electrolyte to improve the low temperature performance of the cell, said electrolyte employing an organic solvent, such as a mixture of propylene carbonate and dimethoxyethane, in which is dissolved two inorganic salts, one of which contains an anion different from that of the main solute. Examples in this application use $LiClO_4$ as the main solute along with $LiBF_4$, $LiAlCl_4$, $LiPF_6$, $LiAsF_6$ or $KPF_6$ as the added inorganic salt in a mixture of propylene carbonate and dimethoxyethane as the solvent.

DE—A—3,235,941 discloses a nonaqueous cell, namely one having a positive electrode (cathode), a negative electrode (anode) which may be made of Li, K, Na, Ca, Mg or an alloy thereof, and an electrolyte solution based on organic solvent. In the list of solvents propylene carbonate and dimethoxy methane are presented, the ionizing solutes may be single or double salts or a mixture, e.g. $LiCF_3SO_3$ or $LiClO_4$.

Although these specific solutes and solvents have been mentioned as good electrolyte solutions for certain cell systems, it is not always possible to predict whether combinations of these components would effectively and efficiently function in other cell systems. Thus while the theoretical energy, i.e., the electrical energy potentially available from a selected anode-cathode couple, is relatively easy to calculate, there is a need to choose a nonaqueous electrolyte for a couple that permits the actual energy produced by an assembled battery to approach the theoretical energy. The problem usually encountered is that it is practically impossible to predict in advance how well, if at all, a conductive nonaqueous electrolyte will function with a selected couple with regard to stability and corrosion behavior. Thus a cell must be considered as a unit having three parts: a cathode, an anode, and an electrolyte, and it is to be understood that the parts of one cell are not predictably interchangeable with parts of another cell to produce an efficient and workable cell.

It is an object of the present invention to provide a nonaqueous cell employing an electrolyte solution of lithium perchlorate and lithium trifluoromethane sulfonate dissolved in a mixture of propylene carbonate and dimethoxyethane which provides excellent low temperature performance characteristics and excellent shelf life characteristics.

It is another object of the present invention to provide a nonaqueous cell employing an electrolyte solution of lithium perchlorate and lithium trifluoromethane sulfonate dissolved in a mixture of propylene carbonate and dimethoxyethane, said electrolyte solution being stable in the cell and inhibiting corrosion of the cell components.

Summary of the invention

It has been found that an electrolyte solution of lithium perchlorate ($LiClO_4$) dissolved in a mixture of propylene carbonate (PC) and dimethoxyethane (DME) can be used in a nonaqueous cell to provide excellent shelf life and high rate capability for the cell. However, in some cell applications, the performance of a cell employing this electrolyte in a low temperature environment. i.e., about −10°C and lower, can be rather poor. It was found that if lithium trifluoromethane sulfonate ($LiCF_3SO_3$) is added to the electrolyte solution, the low temperature performance of the cell can be greatly improved, i.e., the cell will operate at a higher voltage, particularly on pulse discharge, in the low temperature environment while maintaining excellent shelf life. In general it has been found that the electrolyte, particularly the $LiClO_4$ component, will passivate metal surfaces of the cell thereby protecting the surfaces from attack by corrosion-initiating species.

The molar concentration of lithium trifluoromethane sulfonate varies between about 0.25 to about 1.5 and the molar concentration of lithium perchlorate varies between about 0.1 and about 1.0. Preferably, the molar concentration of the lithium trifluoromethane sulfonate should be between about 0.35 and about 0.7 and the molar concentration of lithium perchlorate should be between about 0.25 and about 0.5. In applications where the cell would be operating at low temperatures then a larger amount of lithium trifluoromethane sulfonate would be used. In applications where the cell would be stored at 20°C for a long period of time or where high rate capability is desired, then a larger amount of lithium perchlorate would be used. Thus by using an appropriate mixture of these two salts dissolved in a solvent mixture of PC and DME, an electrolyte solution can be obtained that will have the desirable characteristics of each salt component, i.e., good low temperature performance due to the presence of $LiCF_3SO_3$ and improved shelf life and high rate capability due to the presence of $LiClO_4$.

The ratio of propylene carbonate to dimethoxyethane based on the solvent volume can vary from about 80:20 to 20:80 and is preferably about 50:50. The lithium perchlorate and lithium trifluoromethane sulfonate mixture can vary from about 0.5 molar up to their saturation in the electrolyte solution at the lowest expected operating temperature and preferably is about 1 molar in concentration. Generally, the conductivity should be at least $10^{-3}$ ohm$^{-1}$ cm$^{-1}$.

Cathodes suitable for use with the electrolyte solution of the this invention would include manganese dioxide, poly-carbon fluoride, iron sulfide, $CrO_x$, $Bi_2O_3$, $Ag_2CrO_4$, $Pb_3O_4$, CuS, CuO and $TiS_2$.

The water inherently contained in both electrolytic and chemical types of manganese dioxide can be substantially removed by various treatments. For example, the manganese dioxide can be heated in air of an inert atmosphere at a temperature up to 380°C for about 8 hours or at a lower temperature for a longer period of time. Care should be taken to avoid heating the manganese dioxide above its decomposition temperature which is about 400°C in air. In oxygen atmospheres, higher temperatures may be employed. In accordance with this invention the manganese dioxide should be heated for a sufficient period of time to insure that the water content is reduced preferably below about 1 weight percent, more preferably below about 0.5 and most preferably below about 0.2 weight percent based on the weight of the manganese dioxide. An excessive amount of water would react with the highly active metal anode, such as lithium, and cause it to corrode thereby resulting in hydrogen evolution. After the water removal treatment has been completed, the manganese dioxide should be shielded to prevent adsorption of water from the atmosphere. This could be accomplished by handling the treated manganese dioxide in a dry box or the like. Alternatively, the treated manganese dioxide or the manganese dioxide combined with a conductive agent and a suitable binder could be heat treated to remove water that could have been adsorbed from the atmosphere.

Preferably, the manganese dioxide to be used with the electrolyte of this invention would be heat treated to remove its water content preferably below about 1 weight percent and then it would be mixed with a conductive agent such as graphite, carbon or the like and a binder such as Teflon (trademark for polytetrafluoroethylene), ethylene acrylic acid polymer or the like to produce a solid cathode electrode. If desired, a small amount of the electrolyte can be incorporated into the manganese dioxide cathode mix.

3

The poly-carbon fluoride cathodes for use with the electrolyte of this invention can be composed of carbon and fluorine in which the carbon includes graphitic and non-graphitic forms of carbon, such as coke, charcoal or activated carbon and have the formula $(C_yF_x)_n$ wherein y is 1 or 2, x is greater than 0 up to about 1.2 and n refers to the number of monomer units which can vary widely. Preferably, the poly-carbon fluoride would be those having a y of 1 and an x between about 0.8 and 1.0, and poly-dicarbon monofluoride $(C_2F)_n$.

Fluorinated carbon cathodes are disclosed in US—A—3,536,532, US—A—3,700,502 and US—A—4,271,242 as having the formula $(CF_x)_n$ wherein x varies from 0.5 to about 1.0. US—A—4,139,474 discloses $(C_2F)_n$ material suitable for use as cathodes.

A benefit of the novel electrolyte solution of this invention, when employed with a Li/polycarbon fluoride system, is that the metal components of the cell are protected from corrosion by any unbonded fluoride associated with the polycarbon fluoride material.

Highly active anodes for use in nonaqueous systems employing the novel electrolyte according to this invention would be consumable metals and include aluminum, the alkali metals, alkaline earth metals and alloys of alkali metals or alkaline earth metals with each other and other metals. The term "alloys" as used herein and in the appended claims is intended to include mixtures, solid solutions, such as lithium magnesium, and the intermetallic compounds, such as lithium monoaluminide. The preferred anode materials are lithium, sodium, potassium, calcium, magnesium and alloys thereof. Of the preferred anode materials, lithium would be the best because, in addition to being a ductile metal that can be easily assembled in a cell, it possesses the highest energy-to-weight ratio of the group of suitable anodes.

Example 1

Several cylindrical cells (33 mm high and 16,4 mm in diameter) were constructed employing a cathode of 6.2 grams mix containing 88% by weight heat-treated $MnO_2$, 9% by weight graphite, and 3% by weight polytetrafluoroethylene; a lithium anode (0.45 gram); two layers of separator material (nonwoven polypropylene and microporous polypropylene); and about 2.6 grams of an electrolyte solution of $LiClO_4$ and/or $LiCF_3SO_3$ in the approximate molar concentrations shown in Table 1 in a 50:50 volume ratio of PC to DME. Some cells were discharged at 20°C across a 60-ohm load to a 1.8 volt cutoff. Other cells were stored for various time periods at 60°C and then discharged at 20°C across a 60-ohm load to a 1.8 volt cutoff. The data obtained are shown in Table 1.

Cell C is a comparative example outside the range of the invention.

TABLE 1

| Sample cell | $LiClO_4$ to $LiCF_3SO_3$ approximate molar conc. | Discharge time to 1.8 volts (hours) | | | | |
|---|---|---|---|---|---|---|
| | | | Storage time at 60°C (days) | | | |
| | | Fresh | 20 | 40 | 60 | 80 |
| A | 0.5:0.5 | 30.0 | 27.7 | 28.2 | 29.1 | 27.3 |
| B | 0.3:0.7 | 29.7 | 25.8 | 26.9 | 27.9 | 23.3 |
| C | 0:1.0 | 28.8 | 27.5 | 16.8 | 11.5 | 9.7 |

Some cells were either stored at 20°C for various time periods or stored at 60°C for various time periods and then the open circuit voltage (OCV), closed circuit voltage (CCV) and impedance (Imp) were measured for each cell. The closed circuit voltage was taken across a 25-ohm load for 2 seconds. The impedance was measured at 1000 Hz. The data observed are shown in Table 2. As evident from the data, the cells employing a mixture of $LiClO_4$ and $LiCF_3SO_3$ in the electrolyte solution exhibited better shelf characteristics after being stored at 60°C for 40 days or more than the cells that contained only $LiCF_3SO_3$ in the electrolyte solution. Several of each type of cells were examined after disassembly and the cells containing the combination of $LiClO_4$ and $LiCF_3SO_3$ (cell samples A and B) showed no evidence of corrosion of cell components while control cells (sample C) showed visual evidence of corrosion reaction products on the anode surface. This confirms visually the evidence of corrosion demonstrated by the decline in open circuit voltage (OCV) of the control cells.

TABLE 2

| Sample cell | Test | Storage at 20°C—(days) | | Storage at 60°C—(days) | | | |
|---|---|---|---|---|---|---|---|
| | | 7 | 90 | 20 | 40 | 60 | 80 |
| A | OCV (volts) | 3.53 | 3.39 | 3.39 | 3.36 | 3.33 | 3.33 |
| A | CCV (volts) | 2.96 | 3.04 | 2.94 | 2.74 | 2.64 | 2.11 |
| A | Imp (ohms) | 2.2 | 1.7 | 3.7 | 3.5 | 4.0 | 5.3 |
| B | OCV (volts) | 3.54 | 3.36 | 3.39 | 3.38 | 3.34 | 3.34 |
| B | CCV (volts) | 2.89 | 3.04 | 2.88 | 2.55 | 2.58 | 2.21 |
| B | Imp (ohms) | 2.1 | 1.6 | 4.8 | 4.8 | 4.4 | 5.8 |
| C | OCV (volts) | 3.43 | 3.31 | 3.15 | 3.09 | 2.84 | 2.81 |
| C | CCV (volts) | 2.98 | 3.04 | 2.81 | 2.42 | 1.95 | 1.21 |
| C | Imp (ohms) | 2.0 | 1.3 | 3.7 | 3.9 | 7.4 | 24.8 |

Example 2

Several cylindrical cells were constructed as in Example 1 using the same components and amounts, varying only the $LiClO_4$ and $LiCF_3SO_3$ molar concentrations in a 50:50 volume ratio of PC to DME. Some cells were discharged at various temperatures across a 60-ohm load to a 1.8 volt cutoff. Other cells were stored for various time periods at 60°C and discharged across a 60-ohm load to a 1.8 volt cutoff. The data obtained are shown in table 3. As evident from the data, the cells employing a mixture of $LiClO_4$ and $LiCF_3SO_3$ in the electrolyte solution performed better at low temperatures than the cells that contained only $LiClO_4$ in the electrolyte solution.

Cell F is a comparative example outside the range of the invention.

TABLE 3

| Sample cell | $LiClO_4$ to $LiCF_3SO_3$ approximate molar conc. | Discharge time to 1.8 volts (hours) | | | | | |
|---|---|---|---|---|---|---|---|
| | | Fresh cells discharge temp. | | | | *Stored at 60°C (days) | |
| | | 20°C | 0°C | −10°C | −20°C | 20 | 40 |
| D | 0.5:0.5 | 25.8 | 26.6 | 25.5 | 15.8 | 27.2 | 26.8 |
| E | 0.75:.25 | 27.9 | **NT | 22.0 | 0 | **NT | 27.5 |
| F | 1.0:0 | 27.2 | 26.8 | 22.0 | 0 | 28.3 | 27.1 |

\* Discharged at 20°C
\*\* NT=Not tested

Some cells were stored for various time periods at various temperatures and then the open circuit voltage (OCV), closed circuit voltage (CCV) and impedance (Imp) were measured for each cell at ambient temperature. The closed circuit voltage was taken across a 25-ohm load for 2 seconds. The impedance was measured at 1000 Hz. The data observed are shown in Table 4. As evident from the data, cells employing a

mixture of $LiClO_4$ and $LiCF_3SO_3$ in the electrolyte solution in which the molar concentration of $LiClO_4$ was 0.5 up to 1.0 exhibited good shelf characteristics at 60°C.

TABLE 4

| Sample cell | Test | Fresh | Stored at 20°C for 26 weeks | Stored at 60°C for 20 days | Stored at 60°C for 40 days |
|---|---|---|---|---|---|
| D | OCV (volts) | 3.47 | 3.40 | 3.40 | 3.38 |
| D | CCV (volts) | 3.16 | 2.86 | 2.81 | 2.81 |
| D | Imp (ohms) | 1.8 | 1.5 | 2.0 | 4.2 |
| E | OCV (volts) | 3.47 | 3.38 | 3.40 | 3.38 |
| E | CCV (volts) | 3.12 | 2.67 | 2.95 | 2.88 |
| E | Imp (ohms) | 1.5 | 1.2 | NT | 3.4 |
| F | OCV (volts) | 3.47 | 3.37 | 3.40 | 3.37 |
| F | CCV (volts) | 3.24 | 2.62 | 2.85 | 2.70 |
| F | Imp (ohms) | 1.5 | 1.8 | 2.7 | 3.6 |

Example 3

Several cylindrical cells were constructed as in Example 1 using the same components and amounts, varying only the $LiClO_4$ and $LiCF_3SO_3$ molar concentrations in a 50:50 volume ratio of PC to DME. Some cells were discharged at 20°C across a 60-ohm load to a 1.8 volt cutoff. Other cells were stored for various time periods at 60°C and then discharged across a 60-ohm load to a 1.8 volt cutoff. The data obtained are shown in Table 5.

Cells G and I are comparative examples outside the range of the invention.

TABLE 5

| | | Discharge time to 1.8 volts (hours) | | | | | |
|---|---|---|---|---|---|---|---|
| Sample cell | $LiClO_4$ to $LiCF_3SO_3$ approximate molar conc. | Fresh* | Storage time at 60°C (days) | | | Fresh | |
| | | | 20 | 40 | 60 | **0°C | **−20°C |
| G | 1.0:0 | 27.7 | 26.4 | 24.5 | 26.0 | 27.8 | 0 |
| H | 0.5:0.5 | 28.8 | 27.5 | NT | NT | 27.5 | 15.5 |
| I | 0:1.0 | 25.0 | 27.6 | 25.3 | 22.2 | NT | NT |

* Discharge temperature=20°C
** Temperature at which cells were discharged
NT=Not Tested

Some additional cells were either stored at 20°C for various time periods or stored at 60°C for various time periods and then the open circuit voltage (OCV) and closed circuit voltage (CCV) were measured for each cell at ambient temperature. The closed circuit voltage was taken across a 25-ohm load for 2 seconds. The data observed are shown in Table 6. As evident from the data, the cells employing a mixture of $LiClO_4$ and $LiCF_3SO_3$ in the electrolyte solution performed better after being stored at 60°C for 40 days or more than the cells that contained only $LiCF_3SO_3$ in the electrolyte solution.

### TABLE 6

| Sample cell | Test | Fresh | Stored at 60°C—days | | | | |
|---|---|---|---|---|---|---|---|
| | | | 20 | 40 | 60 | 180* | 360* |
| G | OCV (volts) | 3.47 | 3.38 | 3.34 | 3.29 | 3.38 | 3.35 |
| G | CCV (volts) | 3.23 | 2.85 | 2.72 | 2.64 | 2.79 | 3.09 |
| H | OCV (volts) | 3.46 | 3.38 | NT | NT | 3.42 | 3.39 |
| H | CCV (volts) | 3.27 | 2.85 | NT | NT | 2.73 | 3.02 |
| I | OCV (volts) | 3.44 | 3.30 | 3.13 | 3.05 | 3.20 | NT |
| I | CCV (volts) | 3.16 | 2.46 | 2.56 | 2.28 | 2.41 | NT |

NT=Not Tested
* Stored at ambient room temperature

Example 4

Several cylindrical cells (22,99 mm high and 13,5 mm in diameter) were constructed employing a cathode of 1.02 grams mix containing 80% by weight $(CF_x)_n$ where x was about 1.0, 10% by weight acetylene black and 10% by weight polytetrafluoroethylene; a lithium anode (0.24 gram); two layers of separator material (microporous polypropylene and nonwoven polypropylene); and about 1.10 grams of an electrolyte solution of $LiClO_4$ and/or $LiCF_3SO_3$ in the molar concentrations shown in Table 7 in a 50:50 volume ratio of PC to DME.

The open circuit voltage (OCV), closed circuit voltage (CCV) and impedance (Imp) of each cell were measured when fresh and after storage at 60°C for 20 and 40 days. The closed circuit voltage was taken across a 50-ohm load for 2 seconds. The impedance was measured at 1000 Hz. The data observed are shown in Table 7. Several of each type of cells were examined after disassembly and the cells containing the combination of $LiClO_4$ and $LiCF_3SO_3$ (cell sample K) showed substantially less evidence of corrosion reaction products on the anode surface than the control cell (cell sample J). This confirms visually the evidence of corrosion demonstrated by the greater decline in open circuit voltage (OCV) of the control cells.

### TABLE 7

| Sample cell | Approximate molar conc. | Fresh | | | 60°C Storage | | | | | |
|---|---|---|---|---|---|---|---|---|---|---|
| | | | | | 20 days | | | 40 days | | |
| | | OCV (volts) | CCV (volts) | Imp (ohms) | OCV (volts) | CCV (volts) | Imp (ohms) | OCV (volts) | CCV (volts) | Imp (ohms) |
| J | 1M $LiCF_3SO_3$ | 3.32 | 2.67 | 3.5 | 3.00 | 2.32 | 6.9 | 2.95 | 2.32 | 8.0 |
| K | 0.5 M $LiClO_4$ 0.5 M $LiCF_3SO_3$ | 3.39 | 2.76 | 3.5 | 3.29 | 2.17 | 9.4 | 3.11 | 2.06 | 10.9 |

As evident from the data, the use of mixtures of $LiClO_4$ and $LiCF_3SO_3$ as the solute for the electrolyte solution of the cell provided the cells with both good low temperature performance characteristics and good shelf life characteristics.

# 0 138 056

## Claims

1. A nonaqueous cell comprising an active metal anode, a cathode and a nonaqueous electrolyte solution, comprising a solute of lithium perchlorate and lithium trifluoromethane sulfonate dissolved in a solvent mixture of propylene carbonate and dimethoxyethane, characterized in that the molar concentration of lithium perchlorate is between about 0.1 and about 1.0 and the molar concentration of lithium trifluoromethane sulfonate is between about 0.25 and about 1.5.

2. The nonaqueous cell of claim 1 wherein the molar concentration of lithium perchlorate is between about 0.25 and about 0.5 and the molar concentration of lithium trifluoromethane sulfonate is between about 0.35 and about 0.7.

3. The nonaqueous cell of claim 2 wherein the molar concentration of lithium perchlorate is about 0.5 and the molar concentration of lithium trifluoromethane sulfonate is about 0.5.

4. The nonaqueous cell of claim 1 wherein the volume ratio of propylene carbonate to dimethoxyethane is between about 80:20 and 20:80.

5. The nonaqueous cell of claim 1 wherein the volume ratio of propylene carbonate to dimethoxyethane is about 50:50.

6. The nonaqueous cell of claim 1 wherein the total concentration of the lithium perchlorate and the lithium trifluoromethane sulfonate in the electrolyte solution varies from about 0.5 molar up to their saturation in the electrolyte solution.

7. The nonaqueous cell of claim 1 wherein the total concentration of the lithium perchlorate and lithium trifluoromethane sulfonate in the electrolyte solution is about 1 molar.

## Patentansprüche

1. Nichtwässrige Zelle mit einer aktiven Metallanode, einer Kathode und einer nichtwässrigen Electrolytlösung, die als gelösten Stoff Lithium-Perchlorat und Lithiumtrifluormethansulfonat in einer Lösungsmittelmischung aus Propylenkarbonat und Dimethoxyethan aufweist, dadurch gekennzeichnet, daß die Molkonzentration von Lithiumperchlorat zwischen etwa 0,1 und etwa 1,0 und die Molkonzentration von Lithiumtrifluormethansulfonat zwischen etwa 0,25 und etwa 1,5 liegt.

2. Nichtwässrige Zelle nach Anspruch 1, bei der die Molkonzentration von Lithiumperchlorat zwischen etwa 0,25 und etwa 0,5 und die Molkonzentration von Lithiumfluormethansulfonat zwischen etwa 0,35 und etwa 0,7 liegt.

3. Nichtwässrige Zelle nach Anspruch 2, bei der die Molkonzentration von Lithiumperchlorat bei etwa 0,5 und die Molkonzentration von Lithiumtrifluormethansulfonat bei etwa 0,5 liegt.

4. Nichtwässrige Zelle nach Anspruch 1, bei der das Volumenverhältnis von Propylenkarbonat und Dimethoxyethan zwischen ungefähr 80:20 und 20:80 liegt.

5. Nichtwässrige Zelle nach Anspruch 1, bei der das Volumenverhältnis von Propylenkarbonat und Dimethoxyethan bei ungefähr 50:50 liegt.

6. Nichtwässrige Zelle nach Anspruch 1, bei der die Gesamtkonzentration von Lithiumperchlorat und Lithiumtrifluormethansulfonat in der Elektrolytlösung zwischen ungefähr 0,5 molar und ihrer Sättigung in der Electrolytlösung variiert.

7. Nichtwässrige Zelle nach Anspruch 1, bei der die Gesamtkonzentration von Lithiumperchlorat und Lithiumtrifluormethansulfonat in der Elektrolytlösung bei ungefähr 1 molar liegt.

## Revendications

1. Pile non aqueuse, comprenant une anode en métal actif, une cathode et une solution non aqueuse d'électrolyte, constituée de perchlorate de lithium et de trifluorométhanesulfonate de lithium en solution dans un mélange de solvants formé de carbonate de propylène et de diméthoxyéthane, caractérisée en ce que la concentration molaire de perchlorate de lithium se situe entre environ 0,1 et environ 0,1 et la concentration molaire en trifluorométhanesulfonate de lithium se situe entre environ 0,25 et environ 1,5.

2. Pile non aqueuse suivant la revendication 1, dans laquelle la concentration molaire du perchlorate de lithium se situe entre environ 0,25 et environ 0,5 et la concentration molaire en trifluorométhanesulfonate de lithium se situe entre environ 0,35 et environ 0,7.

3. Pile non aqueuse suivant la revendication 2, dans laquelle la concentration molaire en perchlorate de lithium est d'environ 0,5 et la concentration molaire en trifluorométhanesulfonate de lithium est d'environ 0,5.

4. Pile non aqueuse suivant la revendication 1, dans laquelle le rapport en volume du carbonate de propylène au diméthoxyéthane se situe entre environ 80:20 et 20:80.

5. Pile non aqueuse suivant la revendication 1, dans laquelle le rapport en volume du carbonate de propylène au diméthoxyéthane est d'environ 50:50.

6. Pile non aqueuse suivant la revendication 1, dans laquelle la concentration totale en perchlorate de lithium et en trifluorométhanesulfonate de lithium dans la solution électrolytique varie entre environ 0,5 M et la saturation respective dans la solution électrolytique.

7. Pile non aqueuse suivant la revendication 1, dans laquelle la concentration molaire totale en perchlorate de lithium et en trifluorométhanesulfonate de lithium dans la solution électrolytiques est d'environ 1.